# EUROPEAN PATENT SPECIFICATION

(11) **EP 0 613 405 B1**
(45) Date of publication and mention of the grant of the patent: **08.08.2001**
(21) Application number: 92922985.4
(22) Date of filing: 23.10.1992
(51) Int. Cl.: B26B 21/60, B05D 5/08, C08F 8/50

(54) **COATING CUTTING EDGES WITH FLUOROCARBON POLYMERS**
BESCHICHTUNG VON SCHNEIDHAUTEN MIT FLUORKOHLENWASSERSTOFFPOLYMEREN
BORDS TRANCHANTS ENDUITS AVEC DES POLYMERES DE FLUOROCARBONE

(30) Priority: 28.10.1991 GB 9122800
(43) Date of publication of application: 07.09.1994
(73) Proprietor: THE GILLETTE COMPANY, Boston, Massachusetts 02199 (US)
(72) Inventor: TRANKIEM, Hoang Mai, Watertown, MA 02171 (US)
(74) Representative: Baillie, Iain Cameron
(86) International application number: US9209040
(87) International publication number: WO9308926

(56) References cited:
- GB-A- 768 554
- US-A- 3 071 856
- US-A- 3 203 829
- US-A- 3 518 110
- US-A- 4 029 870
- US-A- 4 777 192

## Description

This invention is concerned with a method of coating cutting edges, more particularly razor blade cutting edges, with fluorocarbon polymers.

For many years razor blade cutting edges have been coated with polyfluorocarbons, more particularly polytetrafluoroethylene (PTFE); see, for example, British Specification 906005. The polyfluorocarbons used for this purpose are telomers, that is they are polymers having a relatively low molecular weight. Thus the PTFE conventionally used for the coating of razor blade cutting edges has a molecular weight of about 25000, as compared with PTFE which is conventionally used for the formation of non-stick coatings which has a molecular weight of 3-6 million.

The reason for using fluorocarbon telomers rather than high molecular weight materials for coating cutting edges is that the former give improved blade-to-blade uniformity and coatings of improved durability.

Polyfluorocarbons, such as PTFE, are conventionally made by polymerization of the monomer in an aqueous dispersion and this gives rise to the high molecular weight material referred to above. Fluorocarbon telomers are made by polymerization in a chlorofluorocarbon, such as trichlorotrifluoroethane. However, in view of mounting pressure on industry for environmental reasons to eliminate the use of CFCs in manufacturing processes and in products, there is a need to use an alternative process for making fluorocarbon telomers.

We have now found that fluorocarbon telomers, more particularly, tetrafluoroethylene telomers, made by subjecting high molecular weight polyfluorocarbons in dry powder form to ionizing irradiation can be used to form excellent polyfluorocarbon coatings on razor blade cutting edges, that is coatings having properties equivalent to those obtained with fluorocarbon telomers made by polymerization in a chlorofluorocarbon. For the purpose of forming such coatings the telomer formed by irradiation is dispersed in a volatile organic solvent, such as isopropanol, the dispersion is sprayed on to the cutting edges and heated to remove the solvent and sinter the telomer, the steps of spraying and heating being carried out under generally conventional conditions.

U.S. Patent 4 777 192 describes a method for radiation degradation of a polytetrafluoroethylene polymer to lower its molecular weight to and render it grindable into a powder

According to the present invention, there is provided a method of forming a polyfluorocarbon coating on a razor blade cutting edge, which comprises forming a dispersion of a telomer in a volatile organic liquid, spraying the dispersion on to a razor blade cutting edge, and heating the coating obtained to sinter the polyfluorocarbon, the telomer being obtained by subjecting a fluorocarbon polymer having a molecular weight of at least 1,000,000 in dry powder form to ionizing irradiation of from 20 to 80 megarads.

The ionizing radiation is preferably by γ-rays from a Co⁶⁰ source.

The polyfluorocarbon is preferably polytetrafluoroethylene and irradiation is preferably effected to obtain a telomer having a molecular weight of about 25,000.

For the purpose of forming the dispersion which is sprayed on to the cutting edges, the irradiated polyfluorocarbon should have a fine particle size, preferably an average particle size of not more than 100 microns. The powdered polyfluorocarbon starting material will normally be available as a coarser material than this and it may be ground to this fineness either before or after the irradiation step, preferably the latter.

A large number of volatile organic liquids are suitable for use as the liquid medium of the dispersion; it is currently preferred to use isopropanol. The dispersion preferably contains not more than 1% by weight of the fluorocarbon telomer, for example about 0.5 to 0.7% by weight.

The good results obtained by the method according to the invention which, as stated above, are equivalent to those obtained with fluorocarbon telomers made by polymerization in chlorofluorocarbons - the materials which are currently used to make coatings on razor blade cutting edges - is surprising since we have found that equivalent results cannot be obtained by subjecting high molecular weight polyfluorocarbons present in liquid dispersions to ionizing irradiation, and then using such irradiated dispersions to form the coating. While polyfluorocarbon coatings can be formed by the latter procedure, they do not have the properties looked for in such coatings on razor blade cutting edges. The reason for the significance of carrying out the irradiation with the polyfluorocarbon in the form of a dry powder is not known.

In order that the invention may be more fully understood, the following example is given by way of illustration only.

### Example

Polytetrafluoroethylene ("Teflon 60", Trade Mark, supplied by E.I. du Pont de Nemours & Co.) having a molecular weight in excess of 1,000,000 and in the form of a dry powder, was placed in ampoules of heat-resistant glass and the ampoules were exposed to γ-irradiation from a Co⁶⁰ source at room temperature (25°C.) in air, the dose rate being 3 megarads/hour. After the polymer had received a radiation dose of about 25 megarads, radiation was stopped and the powder was taken out of the ampoules. No discoloration of the powder was observed. Air was blown through the irradiated material to remove the hydrogen fluoride generated by the irradiation of the polytetrafluoroethylene. The irradiated powder was then ground in a grinder to reduce the particle size and passed through a 100 micron sieve.

A dispersion containing 0.7% by weight of the ground and sieved powder in isopropanol was prepared and homogenized with an ultrasonic stirrer. Stainless steel razor blade cutting edges were then sprayed with the dispersion. After drying, the coating on the blade edges was sintered in nitrogen at 650°F. (343°C.) for 35 minutes. The blades so treated exhibited greater blade-to-blade uniformity, better blade performance and the same coating durability as similar blades which had been treated in exactly the same way, but omitting the irradiation step.

## Claims

1. A method of forming a polyfluorocarbon coating on a razor blade cutting edge, which comprises, forming a dispersion of a telomer in a volatile organic liquid, spraying the dispersion on to a razor blade cutting edge, and heating the coating obtained to sinter the polyfluorocarbon characterized in that the telomer is obtained by subjects, a fluocarbon polymer having a molecular weight of at least 1, 000,000 in dry powder form to ionizing irradiation of from 20 to 80 mrads.

2. A method according to claim 1, in which the ionizing radiation is by γ-rays from Co⁶⁰ source.

3. A method according to claim 1 or 2, in which the polyfluorocarbon is polytetrafluoroethylene and irradiation is effected to obtain a telomer having a molecular weight of about 25,000.

4. A method according to claims 1 to 3, in which the irradiated polyfluorocarbon in the dispersion has an average particle size of not more than 100 microns.

5. A method according to any of claims 1 to 4, in which the dispersion contains from about 0.5 to 0.7% by weight of the irradiated polymer.

6. A method according to any of claims 1 to 5, in which the volatile organic liquid of the dispersion is isopropanol.

## Patentansprüche

1. Verfahren zum Erzeugen einer Polyfluorkohlenwasserstoff-Beschichtung auf einer Rasierklingenschneidkante, welches Verfahren umfasst: Erzeugen einer Dispersion eines Telomers in einer flüchtigen organischen Flüssigkeit; Aufsprühen der Dispersion auf die Rasierklingenschneidkante und Erhitzen der erhaltenen Beschichtung, um den Polyfluorkohlenwasserstoff zu sintern, dadurch gekennzeichnet, dass das Telomer erhalten wird, indem ein Fluorkohlenwasserstoff-Polymer mit einer relativen Molekülmasse von mindestens 1.000.000 in Form eines trockenen Pulvers einer ionisierenden Bestrahlung von 20 bis 80 Mrad unterzogen wird.

2. Verfahren nach Anspruch 1, bei welchem die ionisierende Bestrahlung mit Gammastrahlen aus einer Co⁶⁰-Quelle erfolgt.

3. Verfahren nach Anspruch 1 oder 2, bei welchem der Polyfluorkohlenwasserstoff Polytetrafluorethylen ist und die Bestrahlung ausgeführt wird, um ein Telomer mit einer relativen Molekülmasse von etwa 25.000 zu erhalten.

4. Verfahren nach Anspruch 1 bis 3, bei welchem der bestrahlte Polyfluorkohlenwasserstoff in der Dispersion eine mittlere Partikelgröße von nicht mehr als 100 Mikrometer hat.

5. Verfahren nach einem der vorgenannten Ansprüche 1 bis 4, bei welchem die Dispersion etwa 0, 5 bis 0,7 Gewichtsprozent des bestrahlten Polymers enthält.

6. Verfahren nach einem der vorgenannten Ansprüche 1 bis 5, bei welchem die flüchtige organische Flüssigkeit der Dispersion Isopropanol ist.

## Revendications

1. Procédé de formation d'un revêtement de polyfluorocarbone sur des bords coupants de lames de rasoirs, qui comprend les étapes consistant à former une dispersion d'un télomère dans un liquide organique volatil, pulvériser la dispersion sur un bord coupant de lame de rasoir, et chauffer le revêtement obtenu pour fritter le polytéraflurocarbone, caractérisé en ce que le télomère est obtenu en soumettant le polymère de fluorocarbone ayant une masse moléculaire d'au moins 1 000 000 sous forme de poudre sèche à une irradiation ionisante de 20 à 80 Mrads.

2. Procédé selon la revendication 1, caractérisé en ce que la radiation ionisante est des rayons γ provenant d'une source de CO⁶⁰.

3. Procédé selon la revendication 1 ou 2, caractérisé en ce que le polyfluorocarbone est le polytétrafluoroéthylène et que l'irradiation est effectuée pour obtenir un télomère ayant une masse moléculaire d'environ 25 000.

4. Procédé selon les revendications 1 à 3, caractérisé en ce que le polyfluorocarbone irradié dans la dispersion a une taille de particules moyenne non supérieure à 100 microns.

5. Procédé selon l'une quelconque des revendications 1 à 4, caractérisé en ce que la dispersion contient d'environ 0,5 à 0,7% en poids du polymère irradié.

6. Procédé selon l'une quelconque des revendications 1 à 5, caractérisé en ce que le liquide organique volatil de la dispersion est l'isopropanol.
